# EUROPÄISCHE PATENTANMELDUNG

(11) **EP 4 482 092 A1**
(43) Veröffentlichungstag der Anmeldung: **25.12.2024**
(21) Anmeldenummer: 24183281.5
(22) Anmeldetag: 20.06.2024
(51) Int. Cl.: H04L 12/403, H04L 12/40, G05B 19/418, B67C 3/00

(54) **VERFAHREN ZUM BETREIBEN EINER VORRICHTUNG ZUM BEHANDELN VON BEHÄLTERN**

(30) Priorität: 20.06.2023 DE 102023116061
(71) Anmelder: KRONES AG, 93073 Neutraubling (DE)
(72) Erfinder: Herrmann, Florian, 93073 Neutraubling (DE); Bock, Tobias, 93073 Neutraubling (DE)
(74) Vertreter: Nordmeyer, Philipp Werner

(57) **Zusammenfassung**

Verfahren zum Betreiben einer Vorrichtung (1) zum Behandeln von Behältern (200), vorzugsweise in einer Getränkeabfüllanlage, wobei die Vorrichtung (1) aufweist: zumindest ein Messgerät (25) mit mehreren Sensoren (25a, 25b, 25c), die eingerichtet sind, um Messwerte zu je einer entsprechenden Messgröße zu erfassen; eine Steuer- und Auswerteeinheit (100) und ein digitales Kommunikationssystem (110), über das die Steuer- und Auswerteeinheit (100) und das Messgerät (25) in Kommunikation stehen, wobei das Kommunikationssystem (110) eingerichtet ist, um Daten zyklisch zu übertragen, indem je Kommunikationszyklus ein Datenpaket übertragen wird; wobei das Verfahren umfasst: Übertragen der von den Sensoren (25a, 25b, 25c) erfassten und vom Messgerät (25) bereitgestellten Messwerte über das Kommunikationssystem (110) an die Steuer- und Auswerteeinheit (100), wobei hierbei ein, vorzugsweise genau ein, zu einer Messgröße zugehöriger Messwert als ein Datenpaket pro Kommunikationszyklus übertragen wird; und wobei das Messgerät (25) Messwerte unterschiedlicher Messgrößen in einen Datenabfolgezyklus (DZ), der sich über mehrere Kommunikationszyklen des Kommunikationssystems (110) erstreckt, bündelt.

## Beschreibung

### Technisches Gebiet

Die vorliegende Erfindung betrifft ein Verfahren zum Betreiben einer Vorrichtung zum Behandeln von Behältern, vorzugsweise in einer Getränkeabfüllanlage, sowie eine Vorrichtung zum Behandeln von Behältern.

### Stand der Technik

In der Getränkeabfüllindustrie, umfassend Anlagen und Prozesse zum Abfüllen von Getränken, Herstellen, Verschließen, Etikettieren von Behältern und dergleichen, finden zunehmend komplexe Steuerungen Anwendung, die Einstellungen der Industrieanlagen automatisch oder teilautomatisiert vornehmen. Zu diesem Zweck werden Sensor- und andere Prozessdaten während des Betriebs der Anlage aufgezeichnet und gegebenenfalls in Echtzeit verarbeitet, um eine Steuerung und/oder Regelung der Anlage vorzunehmen.

Die diversen Daten von Sensoren, Messgeräten und Aktuatoren werden über eine Schnittstelle einer Auswerteeinheit zur Verfügung gestellt, wobei zumeist digitale Schnittstellen und Feldbussysteme Anwendung finden. Mit zunehmender Anzahl an Daten beziehungsweise Messwerten können Bussysteme an die Grenze ihrer Leistungsfähigkeit geraten.

Um die zur Verfügung stehende Bandbreite des Bussystems im technischen Kontext einer Anlage zum Abfüllen von Getränken möglichst optimal nutzen zu können, kann eine priorisierte Übertragung von Daten anhand des aktuellen Prozesses durchgeführt werden, wie in der DE 10 2019 114 488 A1 beschrieben. Eine Auswerteeinheit bestimmt, welche Daten im aktuellen Prozessschritt benötigt werden, forderte diese vom Sensor beziehungsweise Messgerät an, und die Daten werden anschließend zyklisch über das Bussystem übertragen. Die Übertragungsrate der verfügbaren Daten wird hierbei an den Prozess und den damit verbundenen Datenbedarf angepasst.

Die prozessabhängige Anpassung der Datenübertragungsrate kann jedoch die Auswerteeinheit belasten und belegt zudem am Bussystem zyklische Datenframes, welche wiederum die maximale Anzahl an gesendeten Daten beschneiden können. Ferner ist es erforderlich, den Prozess diesbezüglich zu überwachen und in Abhängigkeit der aktiven Prozessphase eine entsprechende Änderung der Übertragungsrate der jeweils gerade gewünschten Messdaten anzufordern.

### Darstellung der Erfindung

Eine Aufgabe der Erfindung besteht darin, den Betrieb einer Vorrichtung zum Behandeln von Behältern, vorzugsweise in einer Getränkeabfüllanlage, zu verbessern.

Die Aufgabe wird durch ein Verfahren mit den Merkmalen des Anspruchs 1 sowie eine Vorrichtung mit den Merkmalen des nebengeordneten Vorrichtungsanspruchs gelöst. Vorteilhafte Weiterbildungen folgen aus den Unteransprüchen, der folgenden Darstellung der Erfindung sowie der Beschreibung bevorzugter Ausführungsbeispiele.

Das Verfahren gemäß der Erfindung ist zum Betreiben einer Vorrichtung zum Behandeln von Behältern, hierin auch als "Behälterbehandlungsanlage" bezeichnet, ausgelegt. Die Behälterbehandlungsanlage kann eine oder mehrere Behälterbehandlungsstationen umfassen, so dass entsprechende Behandlungsschritte an den Behältern durchführbar sind. Die Behälterbehandlungsanlage kann beispielsweise eine oder mehrere der folgenden Behälterbehandlungsstationen umfassen: eine Vorrichtung zur Herstellung von Behältern; eine Vorrichtung zum Befüllen der Behälter mit einem Füllprodukt; eine Vorrichtung zum Verschließen der Behälter mit je einem Behälterverschluss; eine Vorrichtung zur Etikettierung der Behälter; eine Vorrichtung zur Qualitätsprüfung der Behälter; einen Puffer zur temporären Pufferung von Behältern sowie zum Ausgleich etwaiger unterschiedlicher Verarbeitungs-/Transportgeschwindigkeiten zwischen Anlagenteilen; eine Packvorrichtung zum Verpacken der befüllten Behälter.

Besonders bevorzugt findet die Behälterbehandlungsanlage in oder als eine Getränkeabfüllanlage Anwendung, so dass zumindest eine der Behälterbehandlungsstationen eine Füllvorrichtung ist, die eingerichtet, um ein Füllprodukt in die Behälter einzuleiten. Als Füllprodukt kommen insbesondere Getränke in Betracht, beispielsweise Wasser (still oder karbonisiert), Softdrinks, Säfte, Bier, Wein, Milchprodukte, Mischgetränke und dergleichen.

Die Behälterbehandlungsanlage weist zumindest ein Messgerät mit mehreren Sensoren auf, die eingerichtet sind, um Messwerte zu je einer entsprechenden Messgröße zu erfassen. Die "Messgröße" bezeichnet die durch einen Sensor zu erfassende beziehungsweise zu detektierende physikalische Größe (Volumendurchfluss, Druck, Temperatur usw.), während die "Messwerte" die entsprechenden Werte beziehungsweise quantitativen Aussagen der zugehörigen Messgröße sind. Das Messgerät stellt die von den Sensoren ermittelten Messwerte bereit, wobei gegebenenfalls Berechnungen zur Aufarbeitung der Rohdaten, Umrechnungen usw. durch das Messgerät durchgeführt werden können.

Die Behälterbehandlungsanlage weist ferner eine Steuer- und Auswerteeinheit auf, die insbesondere für die Steuerung und/oder Regelung sowie Überwachung des Behandlungsprozesses eingerichtet ist.

Die Behälterbehandlungsanlage weist ferner ein digitales Kommunikationssystem auf, über das die Steuer- und Auswerteeinheit und das Messgerät in Kommunikation stehen. Das Kommunikationssystem ist eingerichtet, um Daten zyklisch zu übertragen, indem je Kommunikationszyklus ein Datenpaket übertragen wird. Das Kommunikationssystem arbeitet in diesem Sinne taktweise.

Die Kommunikation zwischen der Steuer- und Auswerteeinheit und den auszulesenden und anzusteuernden Komponenten der Behälterbehandlungsanlage (Messgeräte, Sensoren, Aktuatoren usw.) kann drahtgebunden oder drahtlos erfolgen. Die Kommunikation muss nicht notwendigerweise einen Informationsaustausch in beide Richtungen umfassen. Ein unidirektionaler Daten- und/oder Signalfluss fällt hierin unter den Begriff der "Kommunikation". Die Steuer- und Auswerteeinheit muss nicht unbedingt durch eine zentrale Recheneinrichtung oder elektronische Regelung gebildet sein, sondern es sind dezentrale und/oder mehrstufige Systeme, Regelungsnetzwerke, Cloud-Systeme und dergleichen umfasst. Die Steuer- und Auswerteeinheit kann zudem integraler Bestandteil einer übergeordneten Anlagensteuerung sein oder mit einer solchen kommunizieren.

Gemäß dem erfindungsgemäßen Verfahren werden die von den Sensoren erfassten und vom Messgerät bereitgestellten Messwerte über das Kommunikationssystem an die Steuer- und Auswerteeinheit übertragen, wobei hierbei ein, vorzugsweise genau ein, zu einer Messgröße zugehöriger Messwert als ein Datenpaket pro Kommunikationszyklus (=Takt) übertragen wird, und wobei das Messgerät Messwerte unterschiedlicher Messgrößen in einen Datenabfolgezyklus, der sich über mehrere Kommunikationszyklen des Kommunikationssystems erstreckt, bündelt.

In anderen Worten, das Messgerät und das Kommunikationssystem führen ein Multiplexverfahren durch, indem Messwerte unterschiedlicher Messgrößen, d.h. geliefert von unterschiedlichen Sensoren, zusammengefasst und gemeinsam übertragen werden. Dies ist möglich, da die Datengenerierung durch das Messgerät meist durch ein eigenes zeitlich reproduzierbares, zyklisches Ereignis getriggert wird. Es ist daher vorhersehbar beziehungsweise berechenbar, wann und mit welcher Datenrate neue Daten durch das Messgerät zur Verfügung gestellt werden kann, wobei die Aktualisierung von Messwerten gewöhnlich länger als ein Takt im Kommunikationssystem dauert. Daraus kann die Anzahl nicht sinnvoll genutzter Kommunikationszyklen abgeleitet werden, welche dann für die Übertragung anderer Daten genutzt werden können. Es ist somit möglich, eine sinnvolle zyklische Abfolge der Übertragung von Messwerten festzulegen und die Daten so zu multiplexen.

Die Steuer- und Auswerteeinheit kann den Behandlungsprozess unter Berücksichtigung der so empfangenen Messwerte steuern und/oder regeln.

Durch das erfindungsgemäße Verfahren ist es möglich, verschiedene Messwerte aus einem oder mehreren Messgeräten über eine in der Breite (Anzahl Bytes) beschränkte Schnittstelle auf einem Kanal über das digitale Kommunikationssystem an die Steuer- und Auswerteeinheit zu übertragen, ohne wesentliche Einbußen hinsichtlich Übertragungsrate und Qualität der primär genutzten Messdaten.

Ferner ist eine prozessabhängige Umschaltung der Datenübertragungsrate einzelner Datenpakete nicht länger erforderlich. Dies entlastet die Kommunikation von der Steuer- und Auswerteeinheit zu dem Messgerät und zu etwaigen Aktuatoren sowie die Steuer- und Auswerteeinheit selbst.

Es sei darauf hingewiesen, dass Aktuatoren, die in der Lage sind, physikalische Größen, etwa ihren eigenen Zustand betreffend (Ventilöffnungsgrad, Kraft, Druck usw.), zu erfassen und an die Steuer- und Auswerteeinheit zu übermitteln, hierin unter den Begriff "Messgerät" subsumiert sind.

Die Bandbreite des Kommunikationssystems wird insgesamt effizienter genutzt, so dass die Steuer- und Auswerteeinheit Entscheidungen zum Behälterbehandlungsprozess auf einer aktuelleren/besseren Datengrundlage treffen kann. Der Behandlungsprozess kann zuverlässiger und mit höherer Qualität durchgeführt werden.

Vorzugsweise enthält der Datenabfolgezyklus Messwerte zumindest einer Messgröße mehrfach. Auf diese Weise können Messwerte von prozessbedingt zeitkritischen Messgrößen häufiger übertragen werden, wodurch die Steuer- und Auswerteeinheit stets über aktuelle Messwerte dieser kritischen Messgrößen verfügt und dadurch präzisiere Entscheidungen über den Behälterbehandlungsprozess treffen kann.

Vorzugsweise definiert der Datenabfolgezyklus eine durch das Messgerät oder die Steuer- und Auswerteeinheit feststehend festgelegte Abfolge von Messgrößen, wodurch ein übertragungstechnisch einfaches und gleichbleibendes Multiplexen der Messdaten realisiert wird. Die Form und/oder Abfolge der Datenpakete in einem Kommunikationszyklus können im Messgerät festgeschrieben sein. Vorzugsweise wird jedoch zumindest die Abfolge der Datenpakete im Datenabfolgezyklus von der Steuer- und Auswerteeinheit festgelegt, so dass diese bedarfsweise angepasst werden kann.

Alternativ kann die Abfolge der Übertragung der Datenpakete dadurch erfolgen, dass den Datenpaketen beziehungsweise Messgrößen eine Priorität zugewiesen wird. Das Messgerät oder die Steuer- und Auswerteeinheit ordnet in diesem Fall den Messgrößen Prioritäten zu, die den Datenabfolgezyklus zumindest teilweise definieren, wobei Messwerte beziehungsweise Datenpakete höher priorisierter Messgrößen öfter übertragen werden als Messwerte niedriger priorisierter Messgrößen. Auf diese Weise können Messwerte von prozessbedingt zeitkritischen Messgrößen gezielt und anpassbar häufiger übertragen werden, wodurch die Steuer- und Auswerteeinheit stets über aktuelle Messwerte dieser kritischen Messgrößen verfügt und dadurch präzisere Entscheidungen über den Behälterbehandlungsprozess treffen kann.

Vorzugsweise wird immer dann, wenn ein neuer beziehungsweise aktualisierter Messwert der höchstpriorisierten Messgröße vom Messgerät generiert wird, ein entsprechendes Datenpaket beziehungsweise der entsprechende Messwert im nächstmöglichen Kommunikationszyklus über das Kommunikationssystem an die Steuer- und Auswerteeinheit übertragen. Ein verspäteter Empfang wichtiger Messwerte durch die Steuer- und Auswerteeinheit im Vergleich beispielsweise zu einer prozessabhängigen Anpassung der Übertragungsrate, die nicht zwingend den Generationszeitpunkt der Messwerte durch das Messgerät beachtet, kann somit ausgeschlossen oder zumindest vermindert werden.

Vorzugsweise weist die Behälterbehandlungsanlage eine Vorrichtung zum Befüllen der Behälter mit einem Füllprodukt, hierin auch als "Füllvorrichtung" bezeichnet, auf. Die Füllvorrichtung umfasst zumindest ein Füllorgan, das eingerichtet ist, um das Füllprodukt in einen entsprechenden Behälter einzuleiten, sowie das zumindest eine Messgerät. Eine effiziente Übertragung von Messwerten ist im Fall der Füllvorrichtung besonders hilfreich, um den Füllprozess möglichst in Echtzeit überwachen und steuern und/oder regeln zu können.

Vorzugsweise weist die Füllvorrichtung eine Vielzahl von Füllorganen auf, die im Fall einer Rundläuferbauweise am Außenumfang eines Füllerkarussells angeordnet sind. Das Füllerkarussell rotiert um eine Rotationsachse, wobei die Behälter während des Umlaufs entlang einer kreisförmigen Trajektorie mit dem Füllprodukt befüllt werden.

Vorzugsweise erfassen die Sensoren des Messgeräts entsprechend einen Volumendurchfluss und/oder eine Fließgeschwindigkeit des Füllprodukts durch das Füllorgan und/oder eine Temperatur des Füllprodukts und/oder eine Dichte des Füllprodukts und/oder einen Druck des Füllprodukts und/oder einen Behälterinnendruck. Die hier genannten Messgrößen sind geeignet, um den Füllprozess zuverlässig überwachen und steuern und/oder regeln zu können.

Die Definition des Datenabfolgezyklus kann je nach Behandlungsprozess, Anforderungen an die Prozessdurchführung usw. geeignet gewählt werden. Der Datenabfolgezyklus kann sich beispielsweise über drei Kommunikationszyklen erstrecken und drei Messwerte von drei Messgrößen bündeln, insbesondere Dichte, Volumendurchfluss oder Fließgeschwindigkeit, und Temperatur. Gemäß diesem Ausführungsbeispiel findet eine gleichberechtigte Übertragung von Messwerten der entsprechenden Messgrößen statt. Alternativ kann sich der Datenabfolgezyklus beispielsweise über sechs Kommunikationszyklen erstreckt, wobei etwa sechs Messwerte von drei Messgrößen gebündelt werden, vorzugsweise Dichte, Volumendurchfluss oder Fließgeschwindigkeit, und Temperatur, wobei beispielsweise Messwerte der prozess- und zeitkritischen Messgröße Volumendurchfluss oder Fließgeschwindigkeit in jedem zweiten Kommunikationszyklus übertragen werden.

Die oben genannte Aufgabe wird ferner durch eine Vorrichtung zum Behandeln von Behältern, vorzugsweise in einer Getränkeabfüllanlage, gelöst, wobei die Vorrichtung aufweist: zumindest ein Messgerät mit mehreren Sensoren, die eingerichtet sind, um Messwerte zu je einer entsprechenden Messgröße zu erfassen; eine Steuer- und Auswerteeinheit und ein digitales Kommunikationssystem, über das die Steuer- und Auswerteeinheit und das Messgerät in Kommunikation stehen, wobei das Kommunikationssystem eingerichtet ist, um Daten zyklisch zu übertragen, indem je Kommunikationszyklus ein Datenpaket übertragen wird; wobei das Messgerät eingerichtet ist, um die von den Sensoren erfassten Messwerte so bereitzustellen, dass vom Kommunikationssystem ein, vorzugsweise genau ein, zu einer Messgröße zugehöriger Messwert als ein Datenpaket pro Kommunikationszyklus übertragen wird; und wobei das Messgerät eingerichtet ist, um Messwerte unterschiedlicher Messgrößen in einen Datenabfolgezyklus, der sich über mehrere Kommunikationszyklen des Kommunikationssystems erstreckt, zu bündeln.

Die technischen Wirkungen, Vorteile sowie Ausführungsformen, die vorstehend in Bezug auf das Verfahren beschrieben wurden, gelten analog für die Behälterbehandlungsanlage.

So ist das Messgerät aus den oben genannten Gründen vorzugsweise eingerichtet, um Messwerte unterschiedlicher Messgrößen so in einem Datenabfolgezyklus zu bündeln, dass der Datenabfolgezyklus Messwerte zumindest einer Messgröße mehrfach enthält.

Das Messgerät oder die Steuer- und Auswerteeinheit kann aus den oben genannten Gründen den Datenabfolgezyklus als eine feststehend festgelegte Abfolge von Messgrößen definieren.

Vorzugsweise ist das Messgerät oder die Steuer- und Auswerteeinheit aus den oben genannten Gründen eingerichtet, um den Messgrößen Prioritäten zuzuordnen, die den Datenabfolgezyklus zumindest teilweise definieren, wobei das Messgerät und das Kommunikationssystem in diesem Fall eingerichtet sind, um Messwerte höher priorisierter Messgrößen öfter zu übertragen als Messwerte niedriger priorisierter Messgrößen.

Vorzugsweise weist die Behälterbehandlungsanlage eine Füllvorrichtung auf. Die Füllvorrichtung umfasst zumindest ein Füllorgan, das eingerichtet ist, um das Füllprodukt in einen entsprechenden Behälter einzuleiten, sowie das zumindest eine Messgerät.

Die Sensoren des Messgeräts sind vorzugsweise eingerichtet, um entsprechend einen Volumendurchfluss und/oder eine Fließgeschwindigkeit des Füllprodukts durch das Füllorgan und/oder eine Temperatur des Füllprodukts und/oder eine Dichte des Füllprodukts und/oder einen Druck des Füllprodukts und/oder einen Behälterinnendruck als Messgröße(n) zu erfassen.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Darstellung einer Vorrichtung zum Behandeln von Behältern gemäß einem Ausführungsbeispiel, umfassend eine Vorrichtung zum Befüllen von Behältern mit einem Füllprodukt und eine Steuer- und Auswerteeinheit;
- Figur 2: eine schematische Darstellung der Vorrichtung zum Befüllen von Behältern mit einem Füllprodukt gemäß einem Ausführungsbeispiel;
- Figur 3: eine schematische Darstellung einer zyklischen Datenübertragung an die Steuer- und Auswerteeinheit durch ein Kommunikationssystem mit redundanter Datenübermittlung;
- Figur 4: eine schematische Darstellung einer zyklischen Datenübertragung an die Steuer- und Auswerteeinheit mit gebündelter, zyklischer Abfolge von Datenpaketen gemäß einem Ausführungsbeispiel;
- Figur 5: eine schematische Darstellung einer zyklischen Datenübertragung an die Steuer- und Auswerteeinheit mit gebündelter, zyklischer Abfolge von Datenpaketen gemäß einem weiteren Ausführungsbeispiel;
- Figur 6: eine schematische Darstellung einer zyklischen Datenübertragung an die Steuer- und Auswerteeinheit mit priorisierter, gebündelter, zyklischer Abfolge von Datenpaketen gemäß einem weiteren Ausführungsbeispiel;
- Figur 7: eine schematische Darstellung einer zyklischen Datenübertragung an die Steuer- und Auswerteeinheit mit priorisierter, gebündelter, zyklischer Abfolge von Datenpaketen gemäß einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholte Beschreibung dieser Elemente wird teilweise verzichtet, um Redundanz zu vermeiden.

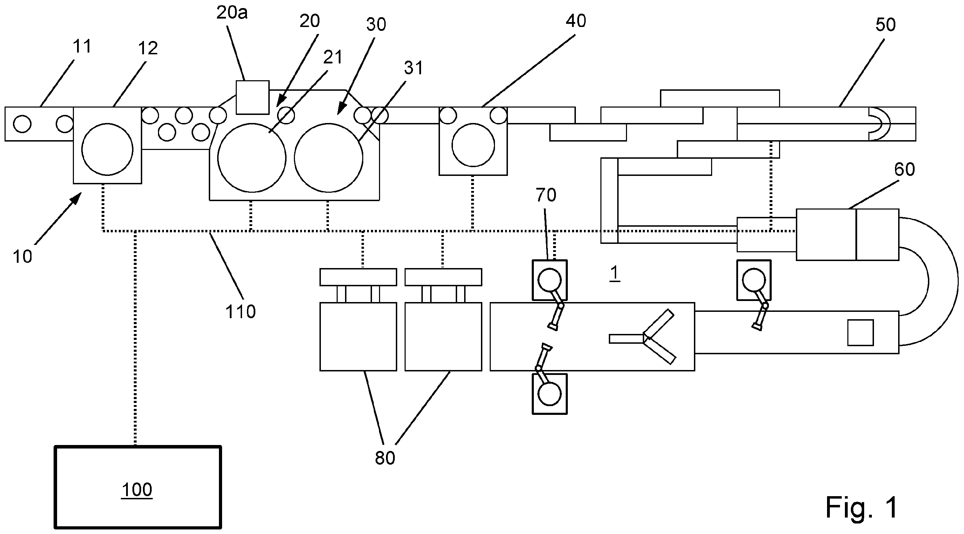

Die Figur 1 zeigt eine Vorrichtung 1 zum Behandeln von Behältern (in der Figur 1 nicht gezeigt), die mehrere Behälterbehandlungsstationen umfasst. Die Vorrichtung 1, auch als "Behälterbehandlungsanlage" bezeichnet, ist im vorliegenden Ausführungsbeispiel als Getränkeabfüllanlage ausgeführt, wobei in diesem Fall zumindest eine der Behälterbehandlungsstationen eine Vorrichtung 20 zum Befüllen der Behälter mit einem Füllprodukt, insbesondere einem Getränk, ist.

Die Behälterbehandlungsanlage 1 umfasst gemäß dem vorliegenden Ausführungsbeispiel die folgenden Behälterbehandlungsstationen: eine Vorrichtung 10 zur Herstellung von Behältern, hierin auch als "Behälterherstellungsvorrichtung" bezeichnet; eine Vorrichtung 20 zum Befüllen der Behälter mit einem Füllprodukt, hierin auch als "Füllvorrichtung" bezeichnet; eine Vorrichtung 30 zum Verschließen der Behälter mit je einem Behälterverschluss, beispielsweise Kronkorken oder Drehverschluss, hierin auch als "Verschließvorrichtung" bezeichnet; eine Vorrichtung 40 zur Etikettierung der Behälter, hierin auch als "Etikettierer" bezeichnet; einen Puffer 50 zur temporären Pufferung von befüllten und etikettierten Behältern sowie zum Ausgleich etwaiger unterschiedlicher Verarbeitungs-/Transportgeschwindigkeiten zwischen Anlagenteilen; eine Packvorrichtung 60 zum Verpacken der Behälter; Roboter 70 zur Lagenherstellung; und einen Palettierer 80, der die verpackten Behälter auf Ladungsträger zusammenfasst.

Die Behälterbehandlungsanlage 1 umfasst demnach eine oder mehrere Behälterbehandlungsstationen, die beispielsweise von der Herstellung der Behälter über deren Befüllung, das Verschließen, Etikettieren bis hin zum Verpacken derselben sukzessive durchlaufen werden. Zu diesem Zweck werden die Behälter beziehungsweise deren Vorformlinge, eine auch als "Preform" bezeichnete Vorstufe der Behälter vor dem Blasformen oder Streckblasformen, entlang eines Förderwegs transportiert. Der Transport erfolgt mittels Transportsternen, Transportbänder und dergleichen, die in der Figur 1 teilweise schematisch dargestellt sind. Vorformlinge, Behälter, Behälterverschlüsse sowie dafür eingerichtete Halterungen/Klammern sind der Übersichtlichkeit halber in der Figur 1 nicht dargestellt. Transporteinrichtungen wie Transportsterne oder Transportbänder können allein der Förderung dienen oder mit Behandlungsorganen entsprechend den Behandlungsstationen ausgestattet sein.

Die in der Figur 1 gezeigten Behälterbehandlungsstationen der Behälterbehandlungsanlage 1 sind nur beispielhaft. So kann die Behälterbehandlungsanlage 1 mit weiteren oder alternativen Behälterbehandlungsstationen, wie etwa einer Reinigungsvorrichtung, einer Prüfvorrichtung zur Sicherstellung der Qualität, beispielsweise zum Prüfen, ob Fremdpartikel in die abgefüllten Behälter gelangt sind, und dergleichen ausgestattet sein. Ebenso können Stationen entfallen, wie etwa die Behälterherstellungsvorrichtung 10, wenn die Behälter bereits in der endgültigen, zu befüllenden Form angeliefert werden, der Puffer 50, die Packvorrichtung 60 und/oder andere.

Die Behälterherstellungsvorrichtung 10 weist eine Einrichtung 11 zum Vorbereiten und Vorwärmen von Vorformlingen aus Kunststoff, vorzugsweise PET, auf. Die so vorbereiteten Vorformlinge werden an eine Blaseinrichtung 12 übergeben, in der die erwärmten Vorformlinge durch Blasen oder Streckblasen zu den zu befüllenden Behältern expandiert werden. Die Behälterherstellungsvorrichtung 10 kann eine nicht näher dargestellte Vorrichtung zur Reinigung, Sterilisierung und/oder Beschichtung der Behälter umfassen.

Die so hergestellten Behälter werden an die Füllvorrichtung 20 übergeben. Im Ausführungsbeispiel der Figur 1 beruht die Füllvorrichtung 20 auf einer Rundläuferbauweise. Sie umfasst zu diesem Zweck ein Füllerkarussell 21, an dessen Außenumfang eine Vielzahl von Füllorganen (in der Figur 1 nicht dargestellt) vorgesehen ist, die zum Einleiten des Füllprodukts in die Behälter eingerichtet sind. Die Füllvorrichtung 20 kann einen Mixer 20a umfassen, der eingerichtet ist, um ein Füllprodukt bestehend aus mehreren Komponenten herzustellen, beispielsweise durch Einmischen von Sirup in einen Trinkwasserstrom.

Nach dem Befüllen werden die Behälter an die Verschließvorrichtung 30 übergeben, die ebenfalls in Rundläuferbauweise ausgeführt sein kann. Die Verschließvorrichtung 30 umfasst hierfür ein Verschließerkarussell 31, an dessen Außenumfang eine Vielzahl von Verschließorganen (in der Figur 1 nicht dargestellt) vorgesehen ist, die zum Verschließen der befüllten Behälter mit je einem Behälterverschluss eingerichtet sind.

Die Übergabe der befüllten Behälter von der Füllvorrichtung 20 an die Verschließvorrichtung 30 kann unmittelbar vom Füllerkarussell 21 an das Verschließerkarussell 31 oder mithilfe eines oder mehrerer Transfersterne erfolgen. Alternativ können die Füllvorrichtung 20 und die Verschließvorrichtung 30 zu einem Füller/Verschließer integriert sein, bei dem die Bearbeitungsprozesse Befüllen und Verschließen an unterschiedlichen Behandlungswinkeln ein und desselben Behandlungskarussells erfolgen.

Die Behälterbehandlungsanlage 1 steht über ein Kommunikationssystem 110 mit einer Steuer- und Auswerteeinheit 100 in Kommunikation.

Die Kommunikation zwischen der Steuer- und Auswerteeinheit 100 und den auszulesenden und anzusteuernden Komponenten (Messgeräte, Sensoren, Aktuatoren usw.) kann drahtgebunden oder drahtlos erfolgen. Die Kommunikation muss nicht notwendigerweise einen Informationsaustausch in beide Richtungen umfassen. Ein unidirektionaler Daten- und/oder Signalfluss fällt hierin unter den

Begriff der "Kommunikation". Die Steuer- und Auswerteeinheit 100 muss nicht unbedingt durch eine zentrale Recheneinrichtung oder elektronische Regelung gebildet sein, sondern es sind dezentrale und/oder mehrstufige Systeme, Regelungsnetzwerke, Cloud-Systeme und dergleichen umfasst. Die Steuer- und Auswerteeinheit 100 kann zudem integraler Bestandteil einer übergeordneten Anlagensteuerung sein oder mit einer solchen kommunizieren.

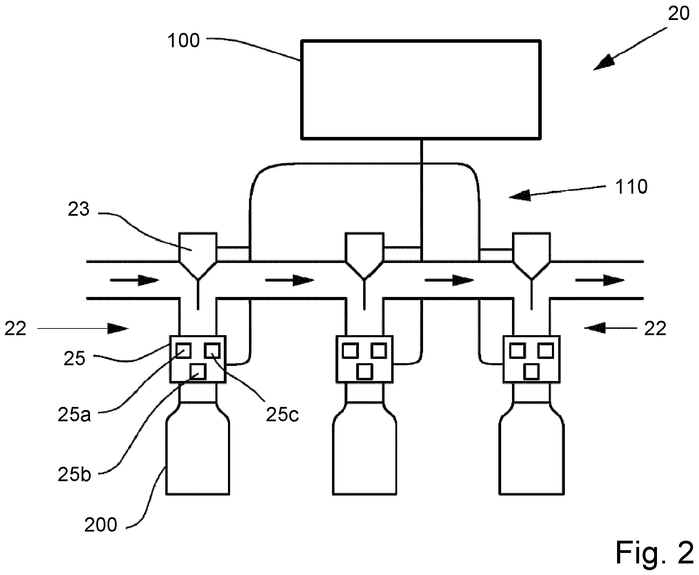

Die Figur 2 zeigt schematisch eine beispielhafte Vorrichtung 20 zum Befüllen von Behältern 200 mit einem Füllprodukt.

In dem in der Figur 2 gezeigten Ausführungsbeispiel umfasst die Füllvorrichtung 20 mehrere Füllorgane 22 mit jeweils einem Füllventil 23, über die ein Füllprodukt in die Behälter 200 eingeleitet wird. Als Füllprodukt kommen vorzugsweise Getränke in Betracht, beispielsweise Wasser (still oder karbonisiert), Softdrinks, Säfte, Bier, Wein, Milchprodukte, Mischgetränke und dergleichen.

Die Füllventile 23 sind besonders bevorzugt als Proportionalventil ausgebildet oder umfassen ein solches. Optional können die Füllventile 23 als Sperrventil ausgebildet sein, das die Ventilmündung nach Bedarf öffnet/schließt. Als Proportionalventil ist das Füllventil 23 eingerichtet, um den Volumenstrom des Füllprodukts zu variieren, somit die pro Zeiteinheit in den Behälter 200 eingeleitete Füllproduktmenge zu regulieren. Ziel ist es, ein effizientes, exaktes und produktschonendes Befüllen entlang einer definierten Füllkurve, die im Allgemeinen eine zeitabhängige Funktion der Füllgeschwindigkeit beziehungsweise des Volumenstroms ist, sicherzustellen.

Die Füllvorrichtung 20 weist vorzugsweise eine Vielzahl von Füllorganen 22 auf, die im Fall einer Rundläuferbauweise am Außenumfang des Füllerkarussells 21 (vgl. Figur 1) angeordnet sind. Das Füllerkarussell 21 rotiert um eine Rotationsachse, wobei die Behälter 200 während des Umlaufs entlang einer kreisförmigen Trajektorie mit dem Füllprodukt befüllt werden. Am Umfang des Füllerkarussells 21 können beispielsweise mehr als 20 oder 50 Füllorgane 22 angeordnet sein, sodass eine effiziente Befüllung eines dem Rundläuferfüller zugeführten Stromes an zu befüllenden Behältern 200 durchführbar ist.

Die Füllorgane 22 weisen je ein Messgerät 25 auf, beispielhaft jeweils mit drei Sensoren 25a, 25b, 25c ausgestattet. Gemäß einem Ausführungsbeispiel ist der Sensor 25a zur Erfassung des Volumendurchflusses und/oder der Fließgeschwindigkeit des Füllprodukts durch das Füllorgan 22, der Sensor 25b als Temperatursensor und der Sensor 25c als Drucksensor eingerichtet.

Jedes Messgerät 25 ist über das Kommunikationssystem 110 mit der Steuer- und Auswerteeinheit 100 verbunden. Die Steuer- und Auswerteeinheit 100 steht ferner über das Kommunikationssystem 110 mit den Füllventilen 23 in Kommunikation, so dass die Steuer- und Auswerteeinheit 100 über das Kommunikationssystem 110 Steuerbefehle zur Einstellung des Zustands beziehungsweise Öffnungsgrads der Füllventile 23 übermittelt. Die Füllventile 23 werden hierbei in Abhängigkeit von Prozessparametern derart geregelt, dass das abzufüllende Füllprodukt auf eine gewünschte Weise, beispielsweis mit minimaler Schaumbildung und in minimaler Zeit, in den jeweiligen Behälter 200 fließen kann.

Das Kommunikationssystem 110 ist eingerichtet, um digitale Daten zyklisch zu übertragen. Das Kommunikationssystem 110 hat eine begrenzte Bandbreite und ist als Bussystem, insbesondere Feldbus, ausgeführt.

Um physikalische Größen zu messen, beispielsweise Volumenstrom, Temperatur und/oder Druck mittels der Sensoren 25a, 25b, 25c, benötigen die Messgeräte 25 Zeit um die gewonnenen Daten aus den Messstrecken beziehungsweise Sensoren 25a, 25b, 25c zu analysieren und aufzubereiten. Dieses Zeitintervall kann ein Vielfaches der Zykluszeit des digitalen Kommunikationssystems 110 betragen. Bei einer zyklischen Übertragung von Daten aus den Messgeräten 25 über das Kommunikationssystem 110 kann es somit vorkommen, dass mehrere Zyklen nacheinander die gleichen Daten beziehungsweise Zahlenwerte für Messgrößen übertagen werden. Da die betreffende Information jedoch bereits nach dem ersten Übertragungszyklus in der Steuer- und Auswerteeinheit 100 vorliegt, sind weitere Übertragungen dergleichen Information redundant.

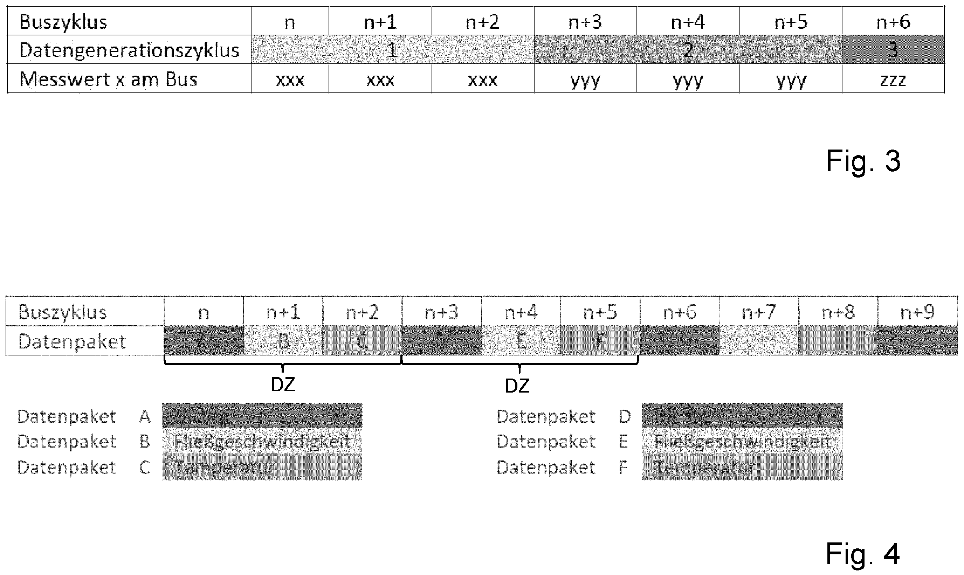

Eine zyklische Datenübertragung mit redundanter Datenübermittlung ist schematisch in der Figur 3 gezeigt, wobei der Buszyklus beziehungsweise allgemein Kommunikationszyklus mit n, n+1, n+2 usw. bezeichnet ist. Der Kommunikationszyklus gibt einen Takt vor, mit dem Datenpakete übermittelt werden. Da der Datengenerationszyklus sich aus den obigen Gründen über mehrere Buszyklen erstreckt, werden die Informationen beziehungsweise Messwerte xxx sowie yyy redundant über mehrere, im vorliegenden Beispiel jeweils drei Buszyklen übertragen.

Die Datengenerierung durch die Messgeräte 25 wird meist durch zeitlich reproduzierbare, zyklische Ereignisse getriggert. Es ist daher oft vorhersehbar beziehungsweise berechenbar, wann und mit welcher Datenrate neue Daten durch die Messgeräte 25 zur Verfügung gestellt werden können.

Daraus kann die Anzahl nicht sinnvoll genutzter Buszyklen abgeleitet werden, welche dann für die Übertragung anderer Daten genutzt werden können. Es ist somit möglich, eine sinnvolle zyklische Abfolge der Übertragung von Daten (Messwerten) festzulegen und die Daten anhand einer fixen oder veränderlichen/anpassbaren Definition zu multiplexen.

Die Figur 4 zeigt eine beispielhafte Abfolge von Datenpaketen im Kommunikationssystem 110, d.h. im Bus-Frame. Gemäß dem Ausführungsbeispiel werden die Dichte, Fließgeschwindigkeit und Temperatur, aufgenommen durch die Sensoren 25c, 25b, 25a, jeweils als ein Datenpakt A, B, C pro Buszyklus n, n+1, n+2 nacheinander über das Kommunikationssystem 110 an die Steuer- und Auswerteeinheit 100 gesendet. Nach Ablauf von drei Buszyklen liegen gemäß diesem Ausführungsbeispiel erwartungsgemäß neue Messwerte an, so dass das Tripel aus Dichte, Fließgeschwindigkeit und Temperatur erneut ab Buszyklus n+3 als Datenpakte D, E, F (die Messwerte haben sich mutmaßlich geändert) über das Kommunikationssystem 110 an die Steuer- und Auswerteeinheit 100 gesendet werden, usw. Im vorliegenden Ausführungsbeispiel umfasst ein Datenabfolgezyklus DZ somit drei Buszyklen, in denen die Dichte, Fließgeschwindigkeit und Temperatur entsprechend als ein Datenpaket pro Buszyklus übertragen werden.

Ist die Bandbreite durch die Kanalanzahl, d.h. die Anzahl parallel übertragbarer Daten, oder durch die Anzahl übertragbarer Daten pro Kanal zu gering, so ist es auf diese Weise möglich, durch eine zyklische Datenpaketabfolge beziehungsweise Messwertabfolge, die vordefiniert sein kann, die Daten zu multiplexen. Das Messgerät 25 beziehungsweise die Messgeräte 25 senden die verschiedenen Messwerte als Datenpakete nacheinander in einer fest definierten Reihenfolge. Dies ist für mehrere parallele Kanäle entsprechend anpassbar beziehungsweise erweiterbar.

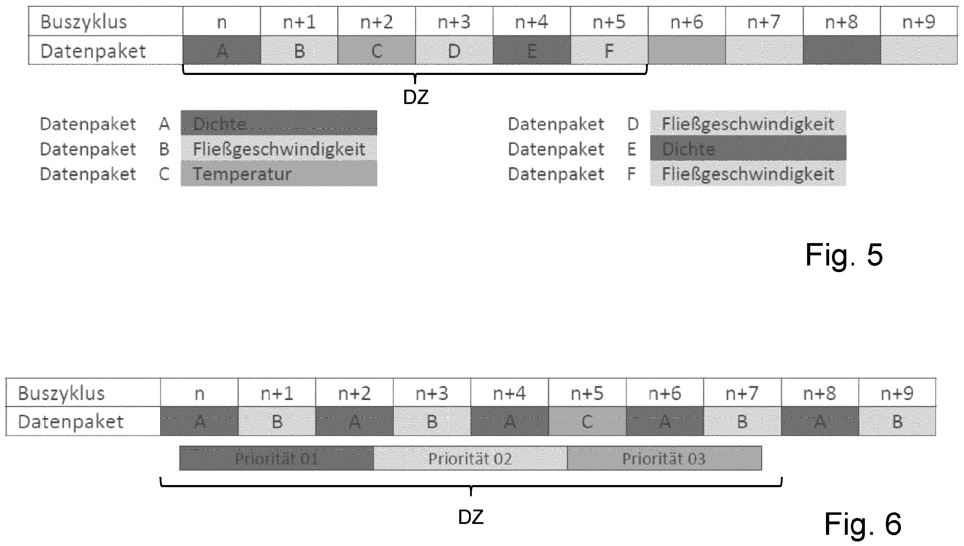

Prozessbedingt zeitkritischere Daten können bei Bedarf in einem Datenabfolgezyklus DZ mehrmals übertragen werden. Im Ausführungsbeispiel der Figur 5 umfasst ein Datenabfolgezyklus DZ sechs Buszyklen, wobei die Fließgeschwindigkeit in jedem zweiten Zyklus/Datenpaket übertragen wird.

Die Form und/oder Abfolge der Datenpakete in einem Zyklus, d.h. die Definition des Datenabfolgezyklus DZ, können im Messgerät 25 festgeschrieben sein. Vorzugsweise wird jedoch zumindest die Abfolge der Datenpakete von der Steuer- und Auswerteeinheit 100 festgelegt, so dass diese bedarfsweise angepasst werden kann.

Die Zuweisung der Datenpakete kann über das Setzen einer fixen Abfolge erfolgen, wie in den Ausführungsformen der Figuren 4 und 5 gezeigt. Alternativ kann die Abfolge der Datenpakete dadurch bestimmt werden, dass den Datenpaketen beziehungsweise Messwerten eine Priorität zugewiesen wird, wie im Ausführungsbeispiel der Figur 6 gezeigt. Höher priorisieret Datenpakete werden in diesem Fall entsprechend öfter übertragen als niedriger priorisierte Datenpakete.

Eine weitere Möglichkeit zur Priorisierung der zu übertragenden Daten besteht darin, für die einzelnen Übertragungskanäle keine fixe Abfolge der Datenpakete für jeden Kanal festzusetzen, sondern den einzelnen zu übertragenden Datenpaketen einen Kanal und jeweils eine Priorität zuzuweisen. Das Messgerät 25 entscheidet dann anhand der Priorisierung, wann welcher Messwert als Datenpaket übertragen wird. Dadurch kann sichergestellt werden, dass immer dann, wenn beispielsweise ein Messwert der Messgröße mit der höchsten Priorität am jeweiligen Kanal neu vom Messgerät 25 generiert wurde, dieser sofort im nächsten Kommunikationszyklus über das Kommunikationssystem 110 der Steuer- und Auswerteeinheit 100 zur Verfügung gestellt wird. Somit werden die Zykluszeit der Datengenerierung im Messgerät 25 und die des Kommunikationssystems 110 in gewisser Weise voneinander entkoppelt. Dies kann den Aufwand für eine zeitliche Synchronisation deutlich reduzieren.

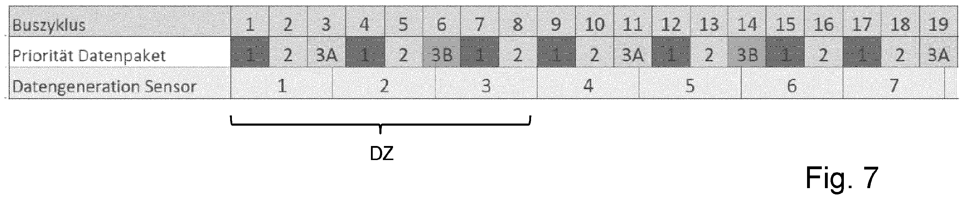

Die Figur 7 zeigt ein Beispiel für die priorisierte Datenübertragung auf Grundlage der Datengeneration des Datenpakets mit der höchsten Priorität, wobei hierin beispielhaft die Prioritätsstufen 1 und 2 jeweils mit einem zugeordneten Messwert/Datenpaket und die Prioritätsstufe 3 mit zwei Messwerten/Datenpaketen vergeben sind. Wann immer die Datengeneration des Sensors 25a, 25b, 25c mit der höchsten Priorität abgeschlossen wurde, werden diese neuen/aktuellen Daten sofort übertragen.

Alternativ oder zusätzlich ist es möglich, priorisierte Datenpakete auf deren Generationszyklus hin beziehungsweise hinsichtlich der Änderung der jeweiligen Messdaten zu überwachen und die Daten nur im Falle einer Änderung zu übertragen. Liegt keine Änderung vor, ist keine Datenübertragung erforderlich, wodurch der nächstniedrigeren Prioritätsstufe entsprechend der Vortritt gewährt wird. Dadurch wird erreicht, dass die Datenpakete priorisiert, aber dennoch immer so schnell wie möglich an die Steuer- und Auswerteeinheit 100 gesendet werden. Die Steuer- und Auswerteeinheit 100 erhält somit trotz Multiplexing möglichst aktuelle Daten, was allgemein die Echtzeitfähigkeit des Systems verbessert.

Auch bei dieser Variante kann die Kanalzuordnung und/oder die Priorität der Abfolge der zu übertragenden Datenpakete im Messgerät 25 festgeschrieben sein, wobei dies jedoch vorzugsweise von der Steuer- und Auswerteeinheit 100 über das Kommunikationssystem 110 frei festlegbar ist.

Durch die oben beschriebene Bündelung von Messdaten ist es möglich, verschiedene Daten aus einem oder mehreren Messgeräten 25 über eine in der Breite (Anzahl Bytes) beschränkte Schnittstelle auf einem Kanal über das digitale Kommunikationssystem 110 an die Steuer- und Auswerteeinheit 100 zu übertragen, ohne wesentliche Einbußen hinsichtlich Übertragungsrate und Qualität der primär genutzten Daten. Im Unterschied dazu wird in einem gängigen CAN-Protokoll beispielsweise auf einem PDO-Datenpunkt/Kanal zyklisch immer nur ein und dasselbe Datenpaket übertragen, wodurch die Schnittstelle beschränkt ist.

Ferner ist eine prozessabhängige Umschaltung der Datenübertragungsrate einzelner Datenpakete nicht länger erforderlich. Dies entlastet die Kommunikation von der Steuer- und Auswerteeinheit 100 zu dem Messgerät 25 und zu etwaigen Aktuatoren, insbesondere Ventilen 23, sowie die Steuer- und Auswerteeinheit 100 selbst.

Das dargelegte Konzept zur Bündelung von Messdaten erlaubt zudem eine Datenübertragung immer dann sofort über das Kommunikationssystem 110, wenn die entsprechenden Daten vom Messgerät 25 neu generiert wurden. Ein verspäteter Empfang wichtiger Daten durch die Steuer- und Auswerteeinheit 100 im Vergleich beispielsweise zu einer prozessabhängigen Anpassung der Übertragungsrate, die nicht zwingend den Generationszeitpunkt der Daten durch das Messgerät 25 beachtet, kann somit ausgeschlossen oder zumindest vermindert werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung zum Behandeln von Behältern
- 10: Vorrichtung zur Herstellung von Behältern
- 11: Einrichtung zum Vorbereiten und Vorwärmen von Vorformlingen
- 12: Blaseinrichtung
- 20: Vorrichtung zum Befüllen von Behältern mit einem Füllprodukt
- 20a: Mixer
- 21: Füllerkarussell
- 22: Füllorgan
- 23: Füllventil
- 25: Messgerät
- 25a: Sensor
- 25b: Sensor
- 25c: Sensor
- 30: Vorrichtung zum Verschließen von Behältern
- 31: Verschließerkarussell
- 40: Vorrichtung zur Etikettierung von Behältern
- 50: Puffer
- 60: Packvorrichtung
- 70: Roboter
- 80: Palettierer
- 100: Steuer- und Auswerteeinheit
- 110: Kommunikationssystem
- 200: Behälter
- DZ: Datenabfolgezyklus

## Patentansprüche

1. Verfahren zum Betreiben einer Vorrichtung (1) zum Behandeln von Behältern (200), vorzugsweise in einer Getränkeabfüllanlage, wobei die Vorrichtung (1) aufweist:
zumindest ein Messgerät (25) mit mehreren Sensoren (25a, 25b, 25c), die eingerichtet sind, um Messwerte zu je einer entsprechenden Messgröße zu erfassen;
eine Steuer- und Auswerteeinheit (100) und ein digitales Kommunikationssystem (110), über das die Steuer- und Auswerteeinheit (100) und das Messgerät (25) in Kommunikation stehen, wobei das Kommunikationssystem (110) eingerichtet ist, um Daten zyklisch zu übertragen, indem je Kommunikationszyklus ein Datenpaket übertragen wird; wobei
das Verfahren umfasst:
Übertragen der von den Sensoren (25a, 25b, 25c) erfassten und vom Messgerät (25) bereitgestellten Messwerte über das Kommunikationssystem (110) an die Steuer- und Auswerteeinheit (100), wobei hierbei ein, vorzugsweise genau ein, zu einer Messgröße zugehöriger Messwert als ein Datenpaket pro Kommunikationszyklus übertragen wird; und wobei
das Messgerät (25) Messwerte unterschiedlicher Messgrößen in einen Datenabfolgezyklus (DZ), der sich über mehrere Kommunikationszyklen des Kommunikationssystems (110) erstreckt, bündelt.

2. Verfahren nach Anspruch 1, **dadurch gekennzeichnet, dass** der Datenabfolgezyklus (DZ) Messwerte zumindest einer Messgröße mehrfach enthält.

3. Verfahren nach Anspruch 1 oder 2, **dadurch gekennzeichnet, dass** der Datenabfolgezyklus (DZ) eine durch das Messgerät (25) oder die Steuer- und Auswerteeinheit (100) feststehend festgelegte Abfolge von Messgrößen definiert.

4. Verfahren nach Anspruch 1 oder 2, **dadurch gekennzeichnet, dass** das Messgerät (25) oder die Steuer- und Auswerteeinheit (100) den Messgrößen Prioritäten zuordnet, die den Datenabfolgezyklus (DZ) zumindest teilweise definieren, wobei Messwerte höher priorisierter Messgrößen öfter übertragen werden als Messwerte niedriger priorisierter Messgrößen.

5. Verfahren nach Anspruch 4, **dadurch gekennzeichnet, dass** immer dann, wenn ein aktualisierter Messwert der höchstpriorisierten Messgröße vom Messgerät (25) generiert wird, ein entsprechendes Datenpaket im nächstmöglichen Kommunikationszyklus über das Kommunikationssystem (110) an die Steuer- und Auswerteeinheit (100) übertragen wird.

6. Verfahren nach einem der vorigen Ansprüche, **dadurch gekennzeichnet, dass** die Vorrichtung (1) zum Behandeln von Behältern (200) eine Vorrichtung (20) zum Befüllen der Behälter (200) mit einem Füllprodukt, vorzugsweise einem Getränk, umfasst, wobei die Vorrichtung (20) zum Befüllen der Behälter (200) zumindest ein Füllorgan (22), das eingerichtet ist, um das Füllprodukt in einen entsprechenden Behälter (200) einzuleiten, sowie das zumindest eine Messgerät (25) aufweist.

7. Verfahren nach Anspruch 6, **dadurch gekennzeichnet, dass** die Sensoren (25a, 25b, 25c) des Messgeräts (25) entsprechend einen Volumendurchfluss und/oder eine Fließgeschwindigkeit des Füllprodukts durch das Füllorgan (22) und/oder eine Temperatur des Füllprodukts und/oder eine Dichte des Füllprodukts und/oder einen Druck des Füllprodukts und/oder einen Behälterinnendruck erfassen.

8. Verfahren nach Anspruch 6 oder 7, **dadurch gekennzeichnet, dass** der Datenabfolgezyklus (DZ) sich über drei Kommunikationszyklen erstreckt und drei Messwerte von drei Messgrößen bündelt, vorzugsweise Dichte, Volumendurchfluss oder Fließgeschwindigkeit, und Temperatur.

9. Verfahren nach Anspruch 6 oder 7, **dadurch gekennzeichnet, dass** der Datenabfolgezyklus (DZ) sich über sechs Kommunikationszyklen erstreckt und sechs Messwerte von drei Messgrößen bündelt, vorzugsweise Dichte, Volumendurchfluss oder Fließgeschwindigkeit, und Temperatur, wobei vorzugsweise Messwerte der Messgrößen Volumendurchfluss oder Fließgeschwindigkeit in jedem zweiten Kommunikationszyklus übertragen werden.

10. Vorrichtung (1) zum Behandeln von Behältern (200), vorzugsweise in einer Getränkeabfüllanlage, wobei die Vorrichtung (1) aufweist:
zumindest ein Messgerät (25) mit mehreren Sensoren (25a, 25b, 25c), die eingerichtet sind, um Messwerte zu je einer entsprechenden Messgröße zu erfassen;
eine Steuer- und Auswerteeinheit (100) und ein digitales Kommunikationssystem (110), über das die Steuer- und Auswerteeinheit (100) und das Messgerät (25) in Kommunikation stehen,
wobei das Kommunikationssystem (110) eingerichtet ist, um Daten zyklisch zu übertragen, indem je Kommunikationszyklus ein Datenpaket übertragen wird; wobei
das Messgerät (25) eingerichtet ist, um die von den Sensoren (25a, 25b, 25c) erfassten Messwerte so bereitzustellen, dass vom Kommunikationssystem (110) ein, vorzugsweise genau ein, zu einer Messgröße zugehöriger Messwert als ein Datenpaket pro Kommunikationszyklus übertragen wird; und
das Messgerät (25) eingerichtet ist, um Messwerte unterschiedlicher Messgrößen in einen Datenabfolgezyklus (DZ), der sich über mehrere Kommunikationszyklen des Kommunikationssystems (110) erstreckt, zu bündeln.

11. Vorrichtung (1) nach Anspruch 10, **dadurch gekennzeichnet, dass** das Messgerät (25) eingerichtet ist, um Messwerte unterschiedlicher Messgrößen so in einem Datenabfolgezyklus (DZ) zu bündeln, dass der Datenabfolgezyklus (DZ) Messwerte zumindest einer Messgröße mehrfach enthält.

12. Vorrichtung (1) nach Anspruch 10 oder 11, **dadurch gekennzeichnet, dass** das Messgerät (25) oder die Steuer- und Auswerteeinheit (100) den Datenabfolgezyklus (DZ) als eine feststehend festgelegte Abfolge von Messgrößen definiert.

13. Vorrichtung (1) nach Anspruch 10 oder 11, **dadurch gekennzeichnet, dass** das Messgerät (25) oder die Steuer- und Auswerteeinheit (100) eingerichtet ist, um den Messgrößen Prioritäten zuzuordnen, die den Datenabfolgezyklus (DZ) zumindest teilweise definieren, wobei das Messgerät (25) und das Kommunikationssystem (110) eingerichtet sind, um Messwerte höher priorisierter Messgrößen öfter zu übertragen als Messwerte niedriger priorisierter Messgrößen.

14. Vorrichtung (1) nach einem der Ansprüche 10 bis 13, **dadurch gekennzeichnet, dass** die Vorrichtung (1) zum Behandeln von Behältern (200) eine Vorrichtung (20) zum Befüllen der Behälter (200) mit einem Füllprodukt, vorzugsweise einem Getränk, umfasst, wobei die Vorrichtung (20) zum Befüllen der Behälter (200) zumindest ein Füllorgan (22), das eingerichtet ist, um das Füllprodukt in einen entsprechenden Behälter (200) einzuleiten, sowie das zumindest eine Messgerät (25) aufweist, wobei die Sensoren (25a, 25b, 25c) des Messgeräts (25) vorzugsweise eingerichtet sind, um entsprechend einen Volumendurchfluss und/oder eine Fließgeschwindigkeit des Füllprodukts durch das Füllorgan (22) und/oder eine Temperatur des Füllprodukts und/oder eine Dichte des Füllprodukts und/oder einen Druck des Füllprodukts und/oder einen Behälterinnendruck zu erfassen.
